# EUROPEAN PATENT SPECIFICATION

(11) **EP 2 848 805 B1**
(45) Date of publication and mention of the grant of the patent: **02.01.2019**
(21) Application number: 13382359.1
(22) Date of filing: 17.09.2013
(51) Int. Cl.: F03D 7/02

(54) **Method of operating a wind turbine**
Verfahren zum Betrieb einer Windturbine
Procédé de fonctionnement d'une éolienne

(43) Date of publication of application: 18.03.2015
(73) Proprietor: Alstom Renovables España, S.L., 08005 Barcelona (ES)
(72) Inventor: Picard, Thomas, 08029 Barcelona (ES)
(74) Representative: ZBM Patents - Zea, Barlocci & Markvardsen

(56) References cited:
- WO-A2-2009/068020
- US-A1- 2011 285 129
- US-A1- 2013 134 711
- US-A1- 2013 161 955
- US-B1- 6 619 918

## Description

The present disclosure relates to methods of operating a wind turbine and to wind turbines suitable for performing such methods.

### BACKGROUND ART

Modern wind turbines are commonly used to supply electricity into the electrical grid. Wind turbine blades are typically attached, at a blade root portion, to a rotor hub, either directly or through an extender, i.e. a cylindrical element arranged between the blade root portion and the hub to increase the diameter of the rotor swept area. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.

A clear trend in the field of wind turbines has been to increase the size of the turbines. With the goal of converting more energy and producing more electricity, towers have become higher and blades have become longer, and it appears that this trend will continue.

The increase in blade length is generally associated to a reduction of blade stiffness in order to control the cost of energy, i.e. avoid using too much material. The blades are typically designed for optimum aerodynamic conditions to optimize the wind turbine's performance for maximum generation of electricity, but as blades increase in size, it becomes increasingly more difficult to control optimum energy capture.

As blades become more slender and disproportionally lighter, blade loads such as e.g. the blade root bending moment may become more critical. The blade loads may be substantially affected by e.g. wind gusts, turbulence and wind shear. Changing wind velocities, and more particularly quickly changing wind velocities can especially affect the blade loads, and thereby impact the fatigue of various wind turbine components, such as e.g. the blades, hub, rotor shaft or gearbox. Furthermore, as blades grow larger, they increasingly undergo an aero-elastic response including deflection and torsion that is a function of the blade loading. This can negatively affect the energy capture.

Pitch systems may be employed in wind turbines for adapting the position of a wind turbine blade to varying wind conditions by rotating the blade along its longitudinal axis. In this respect, it is known to rotate a wind turbine blade in such a way that it generates less lift (and drag) when the wind speed increases. This way, even though the wind speed increases, the torque transmitted by the rotor to the generator remains substantially the same. It is furthermore also known to rotate wind turbine blades towards their stall position (so as to reduce the lift on the blades) when the wind speed increases. These wind turbines are sometimes referred to as "active-stall" wind turbines. Pitching may furthermore also be used for rotation of the blade towards its vane position, when a turbine is temporarily stopped or taken out of operation for e.g. maintenance.

A common control strategy of a variable speed wind turbine is to maintain the blade in a predefined "below rated pitch position" at wind speeds equal to or below nominal wind speed (for example from approximately 3 or 4 m/s to 10 m/s). Said default pitch position may generally be close to a 0° pitch angle. The exact pitch angle in "below rated" conditions depends however on the complete design of the wind turbine. In the lower wind speed regions (at "partial load"), the objective is generally to maximize power output by maintaining pitch constant, thereby catching maximum energy, and varying generator torque and the rotor speed to keep the power coefficient, Cₚ, at a maximum.

When the wind turbine is operating below nominal wind speed, i.e. at the default pitch position, the blades may be subjected to torsion deformation and therefore the wind turbines may not operate at their designed optimum aerodynamic conditions. This is particularly the case for very large wind turbines, with relatively slender blades and blades with relatively low torsion stiffness.

One solution to this problem is to reinforce the blades in order to add stiffness and thus to reduce torsion. Other solutions are based on providing partial span pitch systems arranged to pitch an outboard section of the blade, independently from the inboard part of the blade. But these systems are expensive, heavy and difficult to incorporate in wind turbine blades. US20130134711 describes methods of controlling a wind turbine at below rated wind speed.

It is also known to design wind turbines considering an expected average torsion deformation for the blades and therefore define a default pitch position different than 0° in order to compensate for such an average torsion deformation. But these solutions are not quite precise and thus the wind turbines may not operate at their designed optimum aerodynamic conditions.

It is thus desirable to provide improve methods of operating wind turbines having large blades that increase the overall energy production of the wind turbine especially suitable for below nominal wind speed conditions and that are cost-effective.

### SUMMARY

In a first aspect, a method according to claim 1 of operating a wind turbine is provided. The wind turbine comprises a rotor with a plurality of blades, each of the blades being rotatable along its longitudinal axis using one or more pitch mechanisms. Operation of the wind turbine comprises a sub-nominal zone of operation for wind speeds below a nominal wind speed and a supra-nominal zone of operation for wind speeds equal to or above the nominal wind speed. The method comprises, in the sub-nominal zone of operation, detecting torsion deformation of a section of a blade and pitching the blade as a function of the detected torsion.

According to this aspect, by pitching the blade as a function of the detected torsion, energy capture is optimized in the sub-nominal zone of operation. This means that the pitch angle in the sub-nominal zone of operation, i.e. the minimum pitch angle, changes as a function of the detected torsion. This contravenes normal practice as the minimum pitch angle of the blades is usually not changed in the sub-nominal zone of operation.

It can also be quite a cost-effective solution as pitch mechanisms are usually present in wind turbines for rotating the blades along its longitudinal axis in accordance with instructions from a pitch control system that is also usually present in wind turbines for controlling pitch mechanisms. In order to perform this method, blades provided with torsion deformation detecting means are needed. Such detectors can easily be arranged in existing blades.

In some embodiments, detecting torsion deformation may be done along the outer 20% to 95% of the blade span. In others, it may be done at or near a section of the blade at 80% of the blade span. These areas concentrate most of the torsion deformations.

In some examples not part of the invention, pitching the blade may comprise obtaining a pitch angle suitable for each detected blade torsion deformation from a predefined table. In these cases, obtaining the pitch angle from a predefined table may comprise theoretically determining, by simulation or calculation, a plurality of optimum minimum pitch values suitable for different simulated torsion deformations. In some of these cases, obtaining the pitch angle from a predefined table may further comprise interpolating the detected torsion deformation between theoretical torsion deformations. This method implies a quite intense previous simulation and calculation work, but once the table is built the control system can easily pick the optimum minimum pitch values either directly from the table or by interpolating between the values of the table.

Pitching the blade comprises a trial and error close loop based on pitching the blade a predefined amount of degrees, e.g. 1° or 2° or any number of degrees and determining the actual power coefficient, Cₚ. In some cases, determining the power coefficient may be done from the wind power and the resulting electric power. This means, as a ratio between the mechanical power captured by the wind turbine, which can be determined from the resulting electric power after taking into account system losses, and the available power in the wind, as a function e.g. of the tip speed ratio λ (tangential velocity of the tip of the rotor blades divided by the prevailing wind speed).

In a further aspect, a wind turbine blade is provided. The wind turbine blade may comprise a proximal blade root portion for coupling to a hub or extender of a wind turbine, a distal airfoil portion having a lift-generating shape, and a transition portion between them. The airfoil portion may be provided with one or more sensors for measuring torsion deformation of the blade around its longitudinal axis such that the pitch angle of the blade can be changed as a function of the torsion deformation measured by the sensors. It is thus easy to retrofit in existing blades.

Throughout the description and claims, the term "proximal" is used for the portion of the blade that is to be attached to the hub of a wind turbine when mounted and the term "distal" is used for the portion of the blade that is away from the attachment to the hub.

In some cases, the airfoil portion may be provided with two or more sensors and the pitch angle of the blade may be changed, for instance, as a function of a difference in the readings of two of the sensors, i.e. as a function of the torsion deformation of the blade section between a first and a second sensor.

By measuring the torsion at various blade sections and modifying the minimum pitch according to these measured values, energy captured may be optimized.

In some embodiments, the sensors or detectors may be strain gauges.

In some embodiments, the sensors may be distributed along the outer 20% to 95% of the blade span.

In yet a further aspect a wind turbine is provided. The wind turbine may comprise at least one blade substantially as hereinbefore described and a control unit configured to perform a method substantially as hereinbefore described.

Additional objects, advantages and features of embodiments of the present invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 shows a wind turbine blade comprising a plurality of sensors along its span;and
Figure 2 shows an example of an output obtained using the method of the present invention.

### DETAILED DESCRIPTION

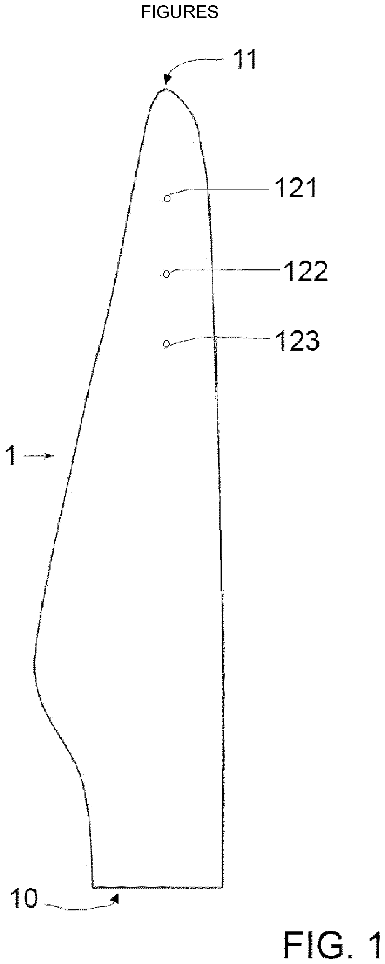

Figure 1 illustrates a top view of a wind turbine blade 1. The wind turbine blade extends from the blade root 10 to a blade tip 11. In the displayed embodiment, three strain gauges 121, 122, 123 have been provided along the blade span, for example, substantially in the outer 30% of the blade span (blade length), i.e. from 70% to 100% of the blade length. In alternative embodiments, more or less strain gauges may be provided and more or less surface of the blade span may comprise sensors. Other type of sensors may also be foreseen as long as they can detect torsion deformation of a wind turbine blade. In alternative embodiments, the sensors may be provided substantially along the entire blade span, or alternatively the sensors may be provided substantially at or near the blade tip.

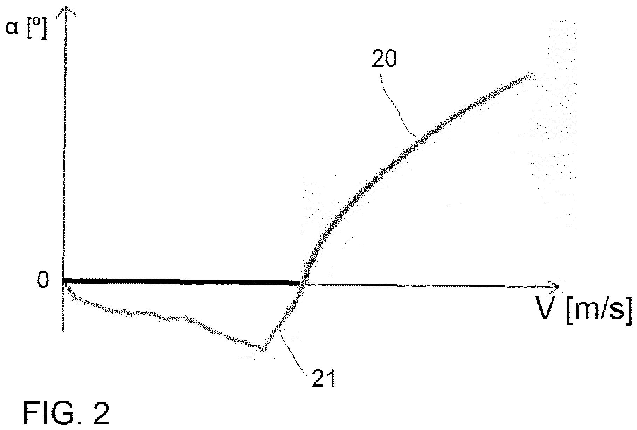

Figure 2 shows the pitch angle α versus incoming wind speed V. Curve 20 shows a theoretical pitch angle having a minimum pitch angle (for wind speeds below nominal) of 0°. Curve 21 shows an example of the output obtained using a method substantially as hereinbefore described in a blade as the one shown in figure 1 i.e. a blade comprising torsion deformation sensors (strain gauges). Curve 21 represents the minimum pitch obtained from detecting torsion deformations and pitching the blade as a function of the detected deformation in order to compensate such deformations.

In order to obtain a curve such as curve 21, the method may involve obtaining a different pitch angle for each torsion deformation detected so as to compensate such a deformation and capture maximum energy. In that sense, at least two alternatives are provided. To obtain the pitch angle from a predefined table or to enter in a trial and error close loop for obtaining a minimum pitch for each torsion deformation detected.

In those cases having two or more sensors, the pitch angle may also be changed as a function of a difference in the readings of any two of the sensors.

Alternatively, the difference in the readings of two of the sensors may further be combined with the absolute value of the readings. This way the detected torsion depends on the combination of the difference in the readings with the absolute values of the readings. In further examples in which more than two sensors are present, there may be a difference in the readings of various of the sensors. In these cases, depending on circumstances, the pitch angle may be changed as a function of any of the differences in between the readings of the sensors or it may be changed as a function of, for example, the highest difference in between the readings of the sensors. Other alternatives may also be foreseen.

In case the minimum pitch angle is extracted from a predefined table a quite intense previous simulation and calculation work needs to be done. However, once the table is built the control system can easily pick the optimum minimum pitch values either directly from the table or by interpolating between the values of the table. In these cases, the table may comprise theoretical values of_minimum pitch suitable for theoretical torsion deformations obtained e.g. by simulation.

In case the minimum pitch angle is extracted from a trial an error close loop then the process implies measuring the power generated by the wind turbine (or Cₚ) in a first time and modifying the pitch angle a predefined amount of degrees, e.g. 1° or 2° and re-measuring the power generated and repeating these two steps until the expected power generated is obtained.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Method of operating a wind turbine comprising a rotor with a plurality of blades, each of the blades being rotatable along its longitudinal axis using one or more pitch mechanisms, wherein operation of the wind turbine comprises a sub-nominal zone of operation for wind speeds below a nominal wind speed, and a supra-nominal zone of operation for wind speeds equal to or above the nominal wind speed and the method comprises in the sub-nominal zone of operation:
detecting torsion deformation of a section of a blade, and
pitching the blade as a function of the detected torsion,
wherein pitching the blade comprises a trial and error closed loop based on pitching the blade a predefined amount of degrees and determining an actual power coefficient Cₚ.

2. Method according to claim 1, wherein detecting torsion deformation is done along the outer 20% to 95% of the blade span.

3. Method according to any of claims 1 or 2, wherein detecting torsion deformation is done at or near substantially 80% of the blade span.

4. Method according to any of claims 1-3, wherein determining actual power coefficient, Cₚ, is done from wind power and electric power.

5. Wind turbine comprising at least one blade, wherein the blade comprises a proximal blade root portion for coupling to a hub or extender of the wind turbine, a distal airfoil portion having a lift-generating shape, and a transition portion between them, wherein the airfoil portion is provided with one or more sensors for measuring torsion deformation of the blade around its longitudinal axis such that the pitch angle of the blade can be changed as a function of the torsion deformation measured by any of the sensors and the wind turbine further comprises a control unit configured to perform a method according to any of claims 1 to 4.

6. Wind turbine according to claim 5, wherein the airfoil portion is provided with two or more sensors and the pitch angle of the blade is changed as a function of a difference in the readings of two of the sensors.

7. Wind turbine according to any of claims 5-6, wherein the sensors are strain gauges.

## Patentansprüche

1. Verfahren zum Betrieb einer Windturbine umfassend einen Rotor mit einer Vielzahl von Blättern, wobei jedes Blatt drehbar entlang seiner Längsachse durch den Einsatz von einer oder mehreren Blattverstellvorrichtungen ist, wobei der Betrieb der Windturbine ein subnominales Betriebsfeld für Windgeschwindigkeiten unterhalb einer Nennwindgeschwindigkeit umfasst, und ein supranominales Betriebsfeld für Windgeschwindigkeiten entsprechend oder oberhalb der Nennwindgeschwindigkeit umfasst und das Verfahren im subnominalen Betriebsfeld folgendes umfasst:
ermitteln der Drehverformung von einem Blattabschnitt, und
verstellen des Blattes in Abhängigkeit von der ermittelten Drehung,
wobei das Verstellen des Blattes einen auf Versuch und Irrtum beruhenden geschlossenen Regelkreis umfasst, der auf einem Verstellen des Blattes um eine vorbestimmte Gradmenge und dem Feststellen von einem tatsächlichen Leistungskoeffizient Cₚ basiert.

2. Verfahren nach Anspruch 1, wobei das Ermitteln der Drehverformung entlang des äußeren 20% bis 95% der Blattspannweite durchgeführt wird.

3. Verfahren nach einem der Ansprüche 1 oder 2, wobei das Ermitteln der Drehverformung am oder in der Nähe von im Wesentlichen 80% der Blattspannweite durchgeführt wird.

4. Verfahren nach einem der Ansprüche 1-3, wobei das Feststellen des tatsächlichen Leistungskoeffizients, Cₚ, ausgehend von der Windleistung und der elektrischen Leistung durchgeführt wird.

5. Windturbine umfassend mindestens ein Blatt, wobei das Blatt einen proximalen Blattwurzelteil zur Kopplung an einer Nabe oder einem Verlängerungsstück der Windturbine, einen distalen Tragflächenteil, der eine auftrieberzeugende Form aufweist, und einen dazwischen gegebenen Übergangsteil umfasst, wobei der Tragflächenteil mit einem oder mehreren Sensoren zur Messung der Drehverformung des Blattes um dessen Längsachse herum versehen ist, so dass der Blattverstellwinkel des Blattes in Abhängigkeit von der durch einen von den Sensoren gemessenen Drehverformung variiert werden kann und die Windturbine weiterhin eine Steuereinheit umfasst, die konfiguriert ist, um ein Verfahren nach einem der Ansprüche 1 bis 4 durchzuführen.

6. Windturbine nach Anspruch 5, wobei der Tragflächenteil mit zwei oder mehreren Sensoren versehen ist und der Blattverstellwinkel des Blattes in Abhängigkeit von einer Differenz in den Ablesewerten von zwei Sensoren variiert wird.

7. Windturbine nach einem der Ansprüche 5-6, wobei die Sensoren Dehnungsmessstreifen sind.

## Revendications

1. Procédé de fonctionnement d'une éolienne comprenant un rotor avec une pluralité de pales, chacune des pales pouvant être pivotée le long de son axe longitudinal en utilisant un ou plusieurs mécanismes de commande de pas de pale, dans lequel le fonctionnement de l'éolienne comprend une région sous-nominale de fonctionnement pour des vitesses du vent au-dessous d'une vitesse nominale du vent, et une région supranominale de fonctionnement pour des vitesses du vent égales à ou au-dessus de la vitesse nominale du vent et le procédé comprend dans la région sous-nominale de fonctionnement :
détecter une déformation par torsion d'une section d'une pale, et
effectuer le pas de pale en fonction de la torsion détectée,
dans lequel effectuer le pas de pale comprend une boucle fermée d'essai et erreur sur la base d'effectuer un pas de pale d'une quantité prédéfinie de degrés et déterminer un coefficient de puissance réel Cₚ.

2. Procédé selon la revendication 1, dans lequel la détection de la déformation par torsion est effectuée le long du 20 % à 95 % plus extérieur de l'envergure de la pale.

3. Procédé selon l'une quelconque des revendications 1 ou 2, dans lequel la détection de la déformation par torsion est effectuée le long de ou près d'essentiellement 80 % de l'envergure de la pale.

4. Procédé selon l'une quelconque des revendications 1-3, dans lequel la détermination du coefficient de puissance réel, Cₚ, est effectuée à partir de la puissance éolienne et la puissance électrique.

5. Éolienne comprenant au moins une pale, dans laquelle la pale comprend une partie de racine de pale proximale pour le couplage à un moyeu ou élément d'extension de l'éolienne, une partie de voilure distale ayant une forme génératrice de portance, une partie de transition située entre celles-ci, dans laquelle la partie de voilure est munie d'un ou de plusieurs capteurs pour mesurer la déformation par torsion de la pale autour de son axe longitudinal, de façon que l'angle de pas de pale de la pale peut être modifié en fonction de la déformation par torsion mesurée par l'un quelconque des capteurs et l'éolienne comprend en outre une unité de contrôle configurée pour effectuer un procédé selon l'une quelconque des revendications 1 à 4.

6. Éolienne selon la revendication 5, dans laquelle la partie de voilure est munie de deux ou plusieurs capteurs et l'angle de pas de pale de la pale est modifié en fonction d'une différence des lectures de deux des capteurs.

7. Éolienne selon l'une quelconque des revendications 5-6, dans laquelle les capteurs sont des jauges de contrainte.
